(19) Europäisches Patentamt
European Patent Office
Office européen des brevets

(11) **EP 3 497 017 B1**

(12) **EUROPEAN PATENT SPECIFICATION**

(45) Date of publication and mention
of the grant of the patent:
**10.11.2021 Bulletin 2021/45**

(21) Application number: **17754927.6**

(22) Date of filing: **08.08.2017**

(51) Int Cl.:
***B64D 27/26*** (2006.01)

(86) International application number:
**PCT/US2017/045906**

(87) International publication number:
**WO 2018/031548 (15.02.2018 Gazette 2018/07)**

(54) **MOUNTING SYSTEMS FOR AIRCRAFT ENGINES**

MONTAGESYSTEME FÜR FLUGZEUGMOTOREN

SYSTÈMES DE MONTAGE POUR MOTEURS D'AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2016 US 201662371895 P**

(43) Date of publication of application:
**19.06.2019 Bulletin 2019/25**

(73) Proprietor: **LORD Corporation
Cary, NC 27511 (US)**

(72) Inventor: **WHITEFORD, Gerald, P.
Waterford
PA 16441 (US)**

(74) Representative: **Murgitroyd & Company
Murgitroyd House
165-169 Scotland Street
Glasgow G5 8PL (GB)**

(56) References cited:
**EP-A1- 1 571 081      EP-A2- 2 607 658
FR-A1- 2 921 900      FR-A1- 2 969 578
GB-A- 2 013 786**

## Description

## TECHNICAL FIELD

The subject matter herein generally relates to mounting systems for aircraft engines. The subject matter herein more particularly relates to engine mount systems for turbofan engines.

## BACKGROUND

Engine mount systems for turbofan engines typically consist of multiple mounts to transmit the loads, including thrust, from the engine to the airframe. In underwing installations the engine mounts typically connect the engine to a pylon that is then in turn connected to the aircraft wing structure.

A typical mount system reacts vertical and lateral loads at the forward mount of the engine. This mount can be attached at a location on either the outer fan case as shown in U.S. Patent No. 7,021,585 or the engine core similar to that shown in U.S. Patent No. 8,950,702. The aft mount is typically attached to the engine turbine case and reacts lateral and vertical loads as well as the engine roll moment (i.e., moment about the engine thrust line). Engine thrust is typically reacted by a linkage system including a whiffletree. The links extend either from the aft side of the forward mount or from the aft mount position. All of these approaches result in thrust being reacted above the thrust axis with a resulting pitch moment that must be reacted by the forward and aft mounts as vertical loads. This results in a bending moment in the core of the engine (i.e., backbone bending). Various methods to alleviate this bending moment have been documented in the art including varying the thrust link angles and forward mount attachment angles to minimize the vertical loading at the rear mount due to engine thrust.

In addition, during climb or other conditions where the nacelle inlet is inclined relative to the airflow, an aerodynamic pitch moment is induced on the inlet and transmitted to the engine as the inlet is attached directly to the front of the engine. This moment must also be reacted by the engine mount system and can result in further backbone bending.

French Patent No. FR2969578B1 discloses a turbojet suspension attachment having hinged links and including a support with three branches having passages through which a pin passes. The pin is oriented generally parallel to a direction that is tangential to a casing and being hinged to a central branch of the support by a ball joint.

European Patent Publication No. EP2607658A2 discloses an accessory for mounting a gas turbine engine from an aircraft frame attached to a pylon. The frame independently mounts the accessories so that engine vibrations are not transmitted to the accessories.

European Patent Publication No. EP1571081A1 discloses a mounting system inserted between an aircraft engine and a rigid structure of an attachment strut fixed under a wing of the aircraft.

French Patent Publication No. FR2921900A1 discloses a propulsion assembly for an aircraft, that comprises: a turbojet engine including a fan casing and an engine casing; a pylon for holding the turbojet engine; and a device for suspending the turbojet engine under the pylon, that comprises two front suspension connecting rods, two rear suspension connecting rods, and a thrust acceleration connecting rod extending between the front portion of the engine casing and the pylon in a plane containing the axis (A) of the turbojet engine.

Great Britain Patent No. GB2013786A discloses a gas turbine engine power plant comprising a gas turbine engine and a fan having respective co-axial annular casings is connected to aircraft structure by a front and a rear mounting.

Accordingly, it would be desirable for a system to eliminate the bending moment in the engine core induced by thrust and by aerodynamic loading on the nacelle including that moment caused by the nacelle angle relative to airflow.

## SUMMARY

In one aspect, an engine mounting system is provided. The engine mounting system includes a first forward mount, an aft mount, and a second forward mount. The first forward mount is connectable between a forward part of a structure of an aircraft and a first forward part of an engine of the aircraft. The first forward mount being configured to react forces generated in each of a longitudinal direction parallel to a longitudinal axis of the engine, in a lateral direction transverse to the engine, and in a vertical direction. The aft mount is connectable between the structure and an aft part of the engine. The aft mount being configured to react forces generated in the lateral direction and to react moments about the longitudinal direction. The second forward mount is connectable between a forward part of the structure and a second forward part of the engine. The second forward mount being configured to react forces generated in the longitudinal direction. In this way, the second forward mount is offset by a distance from the first forward mount such that the reaction of first and second forward mounts to forces in the longitudinal direction reacts moments about the lateral direction (e.g., pitch moments).

Although some of the aspects of the subject matter disclosed herein have been stated hereinabove, and which are achieved in whole or in part by the presently disclosed subject matter, other aspects will become evident as the description proceeds when taken in connection with the accompanying drawings as best described hereinbelow.

## BRIEF DESCRIPTION OF THE DRAWINGS

FIG. 1A is a perspective view of a mounting system inserted between an aircraft engine and a structure of an attachment strut fixed under a wing of an aircraft according to an embodiment of the presently disclosed subject matter.

FIG. 1B is a side view of a mounting system inserted between an aircraft engine and a structure of an attachment strut fixed under a wing of an aircraft according to an embodiment of the presently disclosed subject matter.

FIG. 2A is a perspective view of a mounting system inserted between an aircraft engine and a structure of an attachment strut fixed under a wing of an aircraft according to an embodiment of the presently disclosed subject matter.

FIG. 2B is a side view of a mounting system inserted between an aircraft engine and a structure of an attachment strut fixed under a wing of an aircraft according to an embodiment of the presently disclosed subject matter.

FIG. 3 is a side view of a mounting system inserted between an aircraft engine and a structure of an attachment strut fixed under a wing of an aircraft according to an embodiment of the presently disclosed subject matter.

FIG. 4 is a perspective view of a mounting system in which a second forward mount is designed to act as a structural-mechanical "fuse" under a fan-blade-off event according to an embodiment of the presently disclosed subject matter.

FIGS. 5A and 5B are side perspective cutaway views of a mounting system in which a second forward mount is designed to act as a structural-mechanical "fuse" under a fan-blade-off event according to an embodiment of the presently disclosed subject matter.

FIG. 6 is a side view of a mounting system inserted between an aircraft engine and a structure of an attachment strut fixed under a wing of an aircraft according to an embodiment of the presently disclosed subject matter.

FIG. 7 is a sectional rear view of a fluidic torque restraint device used to decouple the vertical load and roll moment reaction of an aft mount of a mounting system according to an embodiment of the presently disclosed subject matter.

## DETAILED DESCRIPTION

The mount system disclosed herein comprises a first forward mount that reacts loads in the vertical and lateral directions (e.g., perpendicular to the thrust axis) and loads in a longitudinal direction parallel to a longitudinal axis of the engine (e.g., thrust loads). A second forward mount reacts loads in the thrust direction (e.g., axially or forward), such as by a link. The system also includes an aft mount that reacts loads in the lateral direction and moments about the thrust axis (e.g., roll). These mounts together react loads and moments in all directions and retain the engine to the aircraft. In this configuration, backbone or engine core bending and the associated decrease in engine efficiency are reduced or eliminated.

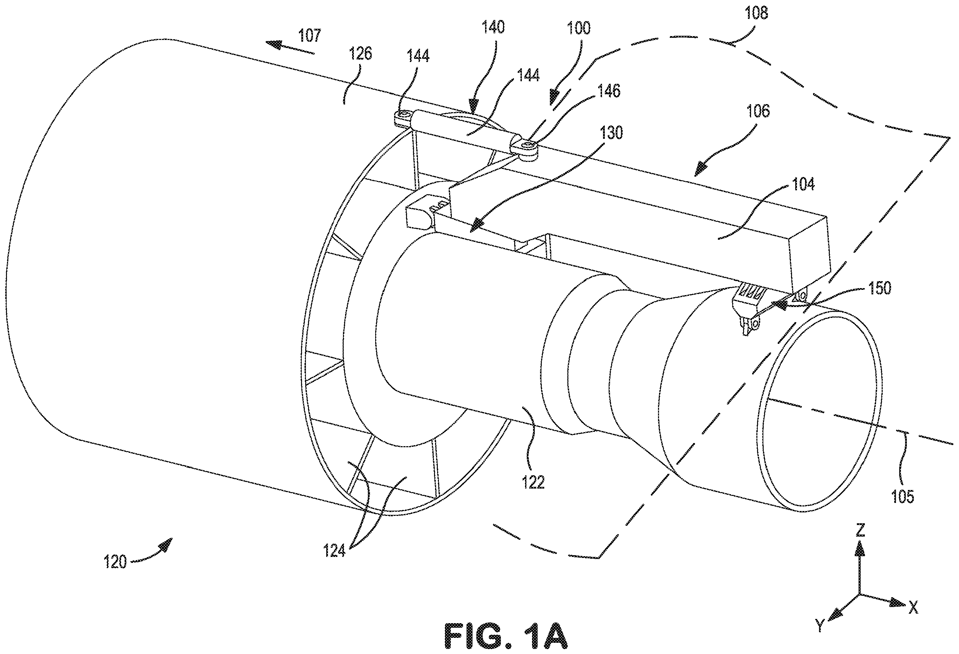

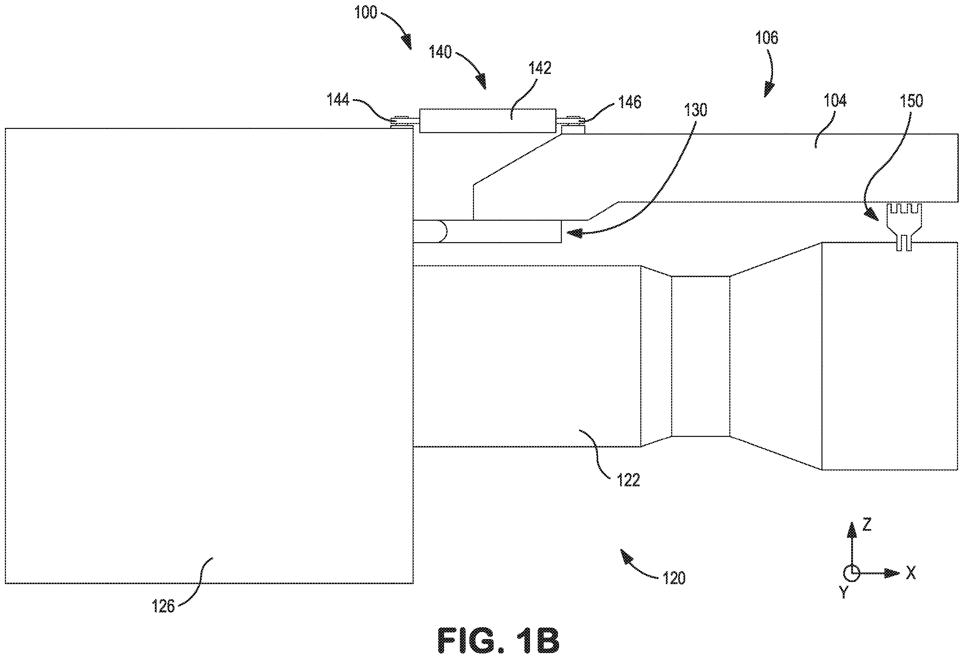

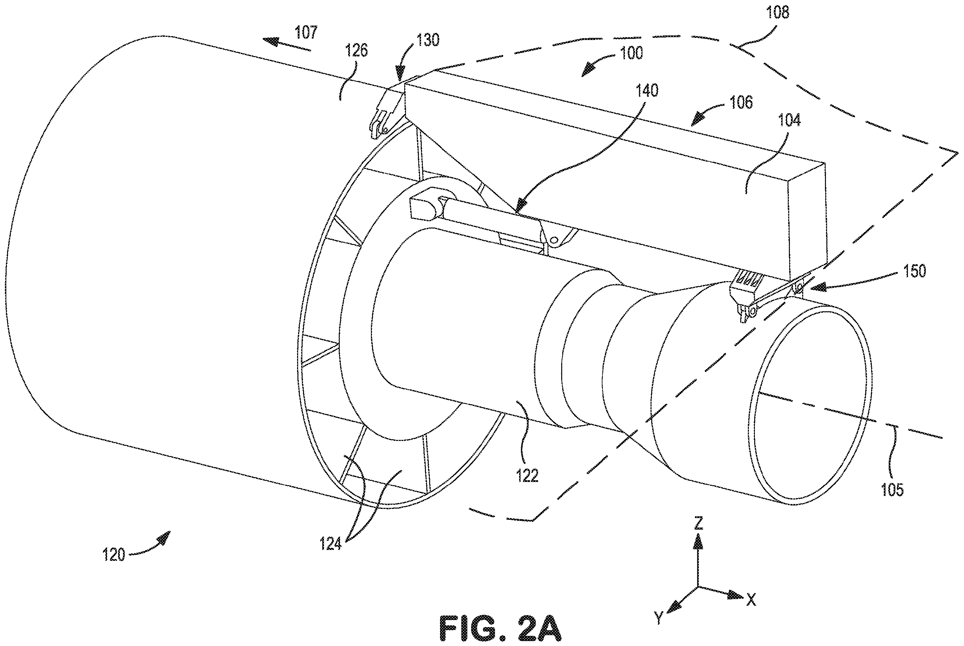

Figures (also "FIGS.") 1A-7 illustrate various aspects, views, and/or features associated with improved engine mount devices, systems, and/or methods. Referring to the embodiments illustrated in FIGS. 1A-2B, a mounting system, generally designated **100,** is inserted between an aircraft engine, generally designated **120,** and a structure **104** (only a portion of which is illustrated in FIGS. 1A-2B) of an attachment strut or pylon **106** fixed under an aircraft wing, generally designated **108,** which is shown only for reasons of clarity. As shown on these FIGS. 1A and 1B, aircraft engine **120** is a turbofan, but those having ordinary skill in the art will understand that mounting system **100** could be a system designed to suspend any other type of engine without departing from the scope of the invention.

Throughout the description given below, by convention, X is the direction parallel to a longitudinal axis **105** of engine **120,** Y is the transverse direction of the aircraft, and Z is the vertical direction, these three directions being orthogonal to each other. Secondly, the terms 'forward' and 'aft' should be considered with respect to a direction of movement of the aircraft that takes place as a result of the thrust applied by engines **120,** this direction being shown in FIGS. 1A and 2A by an arrow **107.**

In the embodiment shown in FIGS. 1A and 1B, mounting system **100** comprises a first forward mount **130** that is coupled on or about the core of engine **120,** an aft mount **150,** and a second forward mount **140** that is displaced radially outward from the engine centerline from the forward mount on the fan case. Second forward mount **140** is designed to resist pitch moments about the Y-axis that tend to generate longitudinal bending of the engine **120.** In this configuration, first forward mount **130** is fixed between a forward end of structure **104** and a forward part of a core **122** of engine **120.** In some embodiments, first forward mount **130** penetrates into a portion of core **122** on which fixed blades **124** are fitted connecting a fan casing **126** of engine **120** to core **122.** In some embodiments, first forward mount **130** comprises generally a ball joint (not shown), also called a monoball, which transmits X, Y, and Z directional forces from engine **120** to the airframe without transmitting moments to the airframe. The monoball may be contained inside core **122** or outside of engine **120**.

Still referring to the embodiment illustrated in FIGS. 1A and 1B, second forward mount **140** is mounted radially outward from first forward mount **130** to permit pitch moment reaction (e.g., caused by thrust reaction offset from the thrust line and/or aerodynamic loads on the nacelle) at the front of engine **120** through core **122**. In the embodiment illustrated in FIGS. 1A and 1B, second forward mount **140** comprises a connecting rod **142** configured to react forces in the longitudinal direction and thereby resist longitudinal bending about the transverse axis of engine **120**. This is the moment that existing mounting systems generate longitudinal bending in engine **120**. In this embodiment, there is no vertical load reaction in the aft mount **150**. The loads at the front of engine **120** remove the moment about the lateral axis. Core **122** is not involved in reacting the moment about the transverse axis. Second forward mount **140** also comprises a first fitting **144** and a second fitting **146**. First fitting **144** connects the forward end of connecting rod **142** to the fan casing **126** (e.g., to an aft part of fan casing **126** at an upper and outer end portion of the casing). Second fitting **146** connects the aft end of rod **142** to structure **104** of pylon **106**, for example using a ball joint. In some embodiments, connecting rod **142** is connected to a forward part of structure **104** as is shown in FIG. 1. Regardless of the particular connection arrangement, in some embodiments, connecting rod **142** is located in a vertical fictitious plane passing through longitudinal axis **105** of engine **120**, and is approximately oriented along the longitudinal X direction. In this arrangement, second forward mount **140** is configured as a link to avoid reacting engine loads in the lateral and vertical directions perpendicular to its axis.

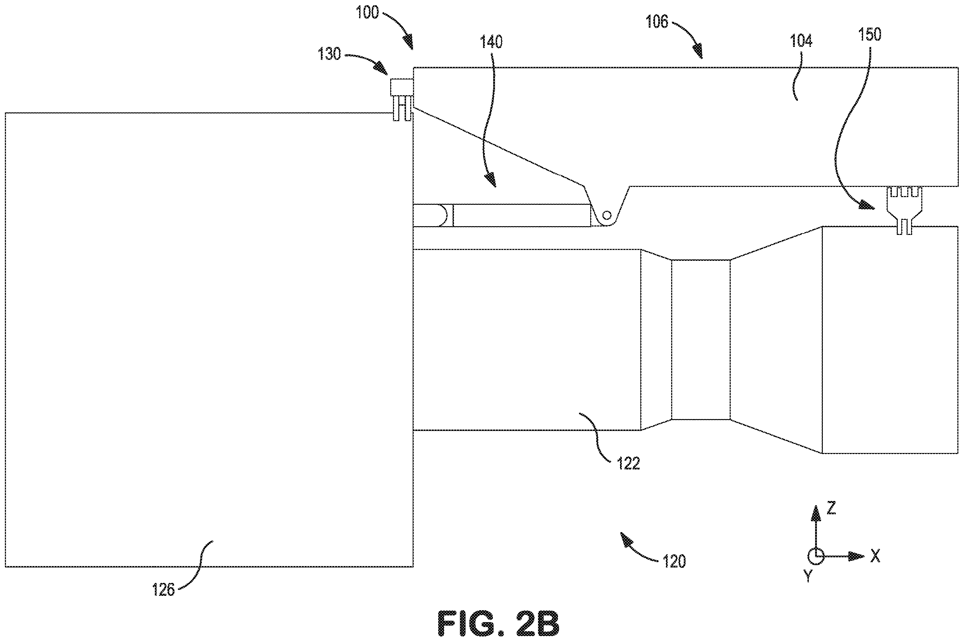

In the embodiment illustrated in FIGS. 2A and 2B, the relative arrangement of first forward mount **130** and second forward mount **140** is substantially reversed such that second forward mount **140** is coupled on or about the core of engine **120**, and first forward mount **130** is displaced radially outward from the engine centerline from the forward mount on the fan case. In this arrangement, first forward mount **130** is again configured to react the vertical, lateral, and longitudinal loads, and second forward mount **140** is configured to react the substantially longitudinal force only.

Regardless of the particular configuration of first and second forward mounts **130** and **140**, aft mount **150** is fixed between an aft part of core **122** and structure **104** of pylon **106**. In some embodiments, aft mount **150** comprises devices and fittings configured to resist forces along the Y direction and resist the moment applied about the X direction. In some embodiments, devices such as those detailed in U.S. Patent Nos. 5,108,045 or 4,805,851 provide a mechanism where moments about an axis can be decoupled form vertical load reaction by use of a torque tube. These kinds of devices are also common in turboprop installation (See, e.g., U.S. Patent No. 5,127,607). In this configuration, little to no vertical load is reacted by aft mount **150**.

This general arrangement prevents loading of aft mount **150** in the vertical direction and bending in core **122** due to thrust and aerodynamic loads generating moments about the lateral Y-axis. Engine core **122** of engine **120** is thus essentially cantilevered from a forward portion of engine **120** relative to vertical loads and only supports its own weight, minimizing bending. In addition, as the design of the bypass ratio of engines is increased and core **122** becomes smaller relative to the size of fan casing **126** and the thrust output, the ability of core **122** to withstand the bending moment of conventional mountings is decreased. The design of mounting system **100** thus becomes more effective as the engine bypass ratio increases and the fan diameter becomes larger relative to the size of core **122**. Thereby allowing for increased distance between the first forward mount **130** and second forward mount **140**, and providing an improved ability to react the moment about the transverse Y-axis, which reduces the load in the thrust direction (i.e., longitudinal direction) at the forward mounts relative to overall engine thrust.

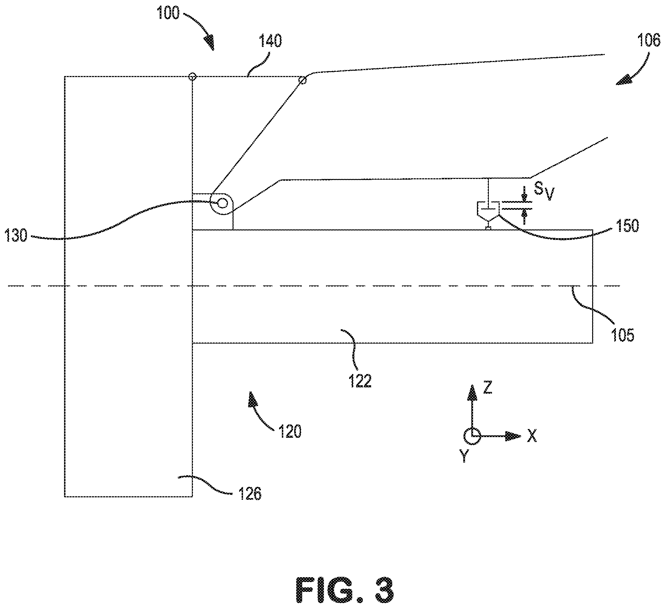

Referring to the embodiment illustrated in FIG. 3, aft mount **150** is configured to begin to react vertical load after a defined pitch deflection is reached (e.g., pitch deflection results in vertical displacement of aft mount **150**). Prior to this point, aft mount **150** does not react vertical loads. First and second forward mounts **130** and **140** react the pitch moment at least until the pitch deflection reaches a specific point. At larger pitch deflections, however, the pitch moment is shared by aft mount **150** in proportion to the relative stiffnesses of the load paths through second forward mount **140** and aft mount **150**. In some embodiments, the defined value of the deflection at which the vertical load begins to be reacted is set so that under normal operating conditions, aft mount **150** does not react vertical loads. In some embodiments, normal operating conditions involve vertical loading of between about 0.5g and 1.5 g, and operation over the full thrust range and normal flight conditions (e.g., take-off through landing) of engine **120** and the aircraft. This ability to react vertical loading beyond a set deflection alleviates potential stress issues in core **122** at infrequent high g conditions. This, in turn, would provide the benefit of reduced bending moment in core **122** while minimizing the weight needed to support the full flight spectrum loads.

In some embodiments, by incorporating second forward mount **140** into mounting system **100**, thrust link systems are not necessary and need not be provided within the area of core **122** of engine **120**, thereby freeing space that is at a premium with new classes of high bypass engines. In addition, by positioning second forward mount **140** on an outboard side of engine **120**, it is in a cooler environment compared to conventional thrust links, permitting the use of lightweight materials. In some embodiments, this positioning is also outside of fire zones, unlike mounts in or around core **122**. Furthermore, where such conventional thrust links are not needed to span the width of core **122** of engine **120,** mounting system **100** is substantially aligned with pylon **106** and is narrower in width compared to conventional mounting systems. In some embodiments, second forward mount **140** is located in line with pylon- and nacelle-flow bifurcations. Any additional strengthening of engine **120** in this region has minimal impact on engine flow paths.

In addition, in some embodiments, this second pitch moment load path is also used as a fail-safe load path in the event of the loss of load carrying capability of second forward mount **140,** such as with fatigue failure or discrete source damage events like rotor burst or fire. In this case, the full pitch moment is reacted by the vertical reaction of aft mount **150** and the vertical load capability of first forward mount **130**. In some embodiments, the design of aft mount **150** is configured to begin to carry vertical loads only in the event of failure of second forward mount **140,** providing added redundancy without significant weight. The use of a failsafe load path as described permits alternate designs and/or inspection means for the system that provide benefit in weight and maintenance costs. In some embodiments, this configuration also avoids the need for redundancy within second forward mount **140** itself, simplifying the design.

In some embodiments, a controlled vertical load capability is added for all pitch deflections, making the system non-isostatic. The primary pitch reaction is the same as discussed above, but aft mount **150** has a limited vertical load carrying capability based upon a controlled spring rate to minimize the stress and deflection of the core of engine **120** due to gravity. This configuration results in some small portion of the pitch moment being reacted by aft mount **150**. In some embodiments, the controlled spring rate is a nonlinear spring type, where the load remains relatively constant (e.g., constant force spring or low spring rate spring with high preload) offsetting 1G effects while permitting motions from thrust pitch moment or nacelle aerodynamic load application without inducing an additional bending moment in engine **120.** This nonlinear spring rate can be provided by any of a variety of mechanisms, such as by fluid or gas pressure, or by elastomeric or metallic nonlinear springs (e.g., Belleville washers or buckling columns, preloaded spring joints). Alternatively, in some embodiments, this controlled spring rate is a linear spring type using a preloading arrangement (e.g., deflection set) to take up a set load at the 1G condition but minimize additional loading during further deflections induced from the thrust or aerodynamic pitch moments noted earlier. In any particular arrangement, aft mount **150** having a limited vertical load carrying capability is beneficial in some situations as the length-to-diameter ratio of core **122** increases and deflection due to gravity loading becomes significant.

In addition, in some embodiments, second forward mount **140** is designed to act as a structural-mechanical "fuse" and at least partially fail under a fan blade off event to alleviate load transmission to pylon **106** and the airframe. Those having ordinary skill in the art will recognize that a fan blade off event can include a rotor burst, bird strike, or any of a variety of similar events. This "fusing" can be done by any of a variety of fuse types known to those having skill in the art, such as buckling, pin shear, attachment failures, etc. In any configuration, such "fusing" involves effecting a reduction in the effective stiffness of second forward mount **140** (i.e., from a first stiffness value to a relatively lower second stiffness value of about 50% or less) as a structural connection between structure **104** and engine **120** and/or a reduction in the stiffness of the materials of second forward mount **140.**

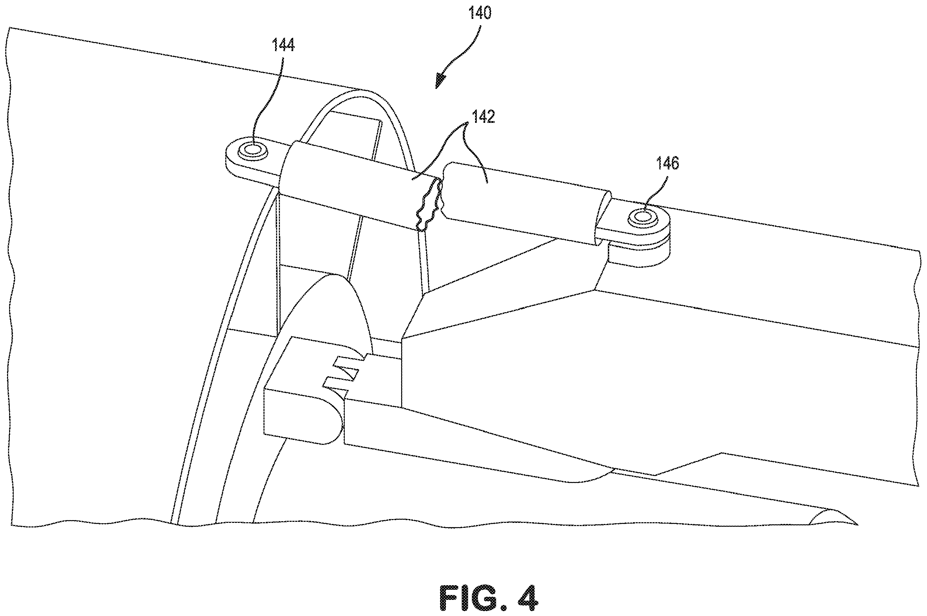

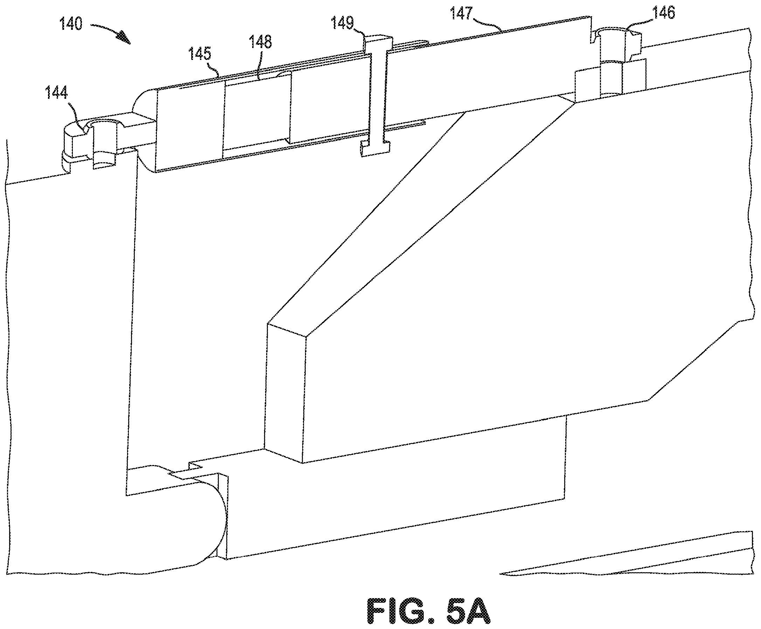

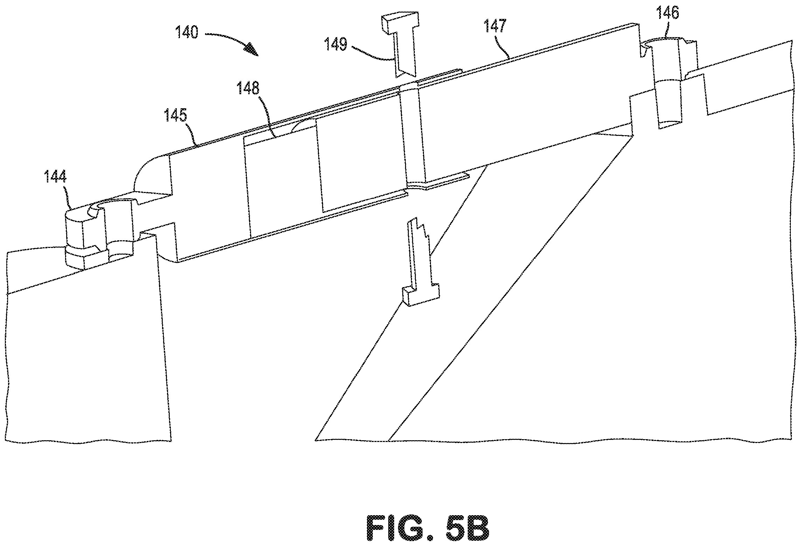

As shown in FIG. 4, for example, in some embodiments, second forward mount **140** is configured to at least partially decouple from the engine (e.g., by buckling or shearing at a point along the length of connecting rod **142** or by detaching from one of engine **120** or pylon **106**) at a defined threshold condition, such as aircraft ultimate maneuver loads. In alternative embodiments, such as is illustrated in FIGS. 5A and 5B, second forward mount **140** is configured as a connecting rod **142** that includes a first rod portion **145** coupled to engine **120** (e.g., at first fitting **144**) and a second rod portion **147** coupled to pylon **106** (e.g., at second fitting **146).** In this embodiment, first and second rod portions **145** and **147** are substantially fixedly coupled under normal operating conditions. In the embodiment illustrated in FIG. 5A, first rod portion **145** includes a hollow end into which a stiffness flexing element **148** (e.g., an elastomer, a metallic mesh, a metal spring) and a second rod portion **147** is insertable. In some embodiments, first and second rod portions **145** and **147** are held together by a fastener **149** (e.g., a pin inserted through both of first and second rod portions **145** and **147**) or other coupling device.

In this configuration, upon a defined threshold condition being met (e.g., a rotor burst, bird strike, or other fan blade off event), fastener **149** is disengaged such that first and second rod portions **145** and **147** are at least partially decoupled from one another (e.g., movable in a longitudinal direction). Such a disengagement of fastener **149** is illustrated in FIG. 5B. In this state, the effective stiffness of second forward mount **140** is reduced, but it is still capable of load reaction. In some embodiments, the composition and/or configuration of stiffness flexing element **148** is designed to achieve a desired stiffness and/or damping with respect to relative movement of first and second rod portions **145** and **147.** Although some embodiments of second forward mount **140** being configured to "fuse" as shown and described, those having ordinary skill in the art will recognize that any of a variety of other configurations can be implemented to achieve a change in stiffness of second forward mount **140** at the defined threshold condition.

Regardless of the particular configuration, after "fusing" second forward mount **140**, aft mount **150** reacts all pitch loading with first front mount **130** due to the axial distance between them. In some embodiments, aft mount **150** under this condition has a stiffness value such that the overall pitch stiffness is significantly reduced. The additional motion capability and lower stiffness of this second pitch restraint state for mounting system **100** permits the mass of engine **120** to react more of the unbalance loads and reduce load transmission to the airframe. In some embodiments, the spring rate characteristics of aft mount **150** are designed to provide this load reduction. In addition, in some embodiments, this softer system remains in effect after the fan blade off event and reduces the windmilling loads by providing a more compliant engine mount system in the pitch direction.

For reference, with both the present configuration of mounting system **100** and similar current mount systems, the center of gravity of engine **120** is very near first forward mount **130,** and fan casing **126** extends well forward of this mount point. In a fan blade off condition, the unbalance at fan casing **126** generates large vertical and lateral loads (e.g., rotating unbalance) that also results in a large pitch and yaw moment. The stiffness of pylon **106** at first forward mount **130** is relatively low compared to that at aft mount **150** due to the cantilever design of pylon **106**. With conventional mount designs, this forward compliance helps to reduce peak loads and subsequent loading in windmilling at the forward mount, but due to the stiff nature of pylon **106** at the rear, especially in the vertical direction, the pitch motion generates high loads. According to the present subject matter, however, by having aft mount **150** configured as a soft vertical mount and permitting larger motions, these loads can be reduced both in windmilling and initial fan blade off conditions. The unbalance forces are then more directly reacted by the engine mass and inertia.

In an example not forming part of the presently claimed subject-matter but useful for understanding it, similar functionality is achieved by employing aft mount **150** in a conventional arrangement (e.g., without second forward mount **140)**. In this embodiment aft mount **150** carries vertical loads under normal conditions and "fusing" under high load to a softer state (e.g., have a stiffness that is reduced from a first stiffness value to a relatively lower second stiffness value of about 50% or less in the vertical direction upon a fan blade off event) that permits larger motion. Although the method of "fusing" second forward mount **140** of mounting system **100** discussed above (e.g., buckling of a link) may be easier in some embodiments since the location away from core **122** is generally cooler and space is less constrained, there are advantages to using a more conventional mounting arrangement in which vertical load is supported at aft mount **150**. In some variants of such a more conventional configuration, however, aft mount **150** may be configured in a way such that the vertical and roll load paths are decoupled from one another. In this way, upon a fan-blade-off event, aft mount **150** is configured to have a reduced stiffness in the vertical direction. In some variants, aft mount **150** may be further configured to be adjustable such that the pitch orientation is adjustable.

In some embodiments, aft mount **150** is configured to provide support to the aft of engine **120** without reacting the thrust or aerodynamic applied pitch moment. In such embodiments, a vertical load support **152** provides support to the aft side of engine **120** to offset the bending moment on the core of engine **120** due to vertical inertia (G-loading) load on engine **120**. When incorporated into mounting system **100** described herein, the full pitch moment on the installation is reacted by first forward mount **130** (and second forward mount **140** if present). These loads are from the aerodynamic moment on the inlet and the offset of the thrust reaction relative to longitudinal axis **105** of engine **120** (e.g., thrust line of the engine) as noted. An internal bending moment within engine **120** also exists due to the weight of engine **120**. If engine **120** is cantilevered as described, the 1G gravitational force and any additional vertical maneuvers result in increased core deflection due to the cantilever. Vertical load support **152,** when coupled with the mounting system **100,** further reduces core bending by significantly reducing even G-load-induced bending relative to a cantilevered core.

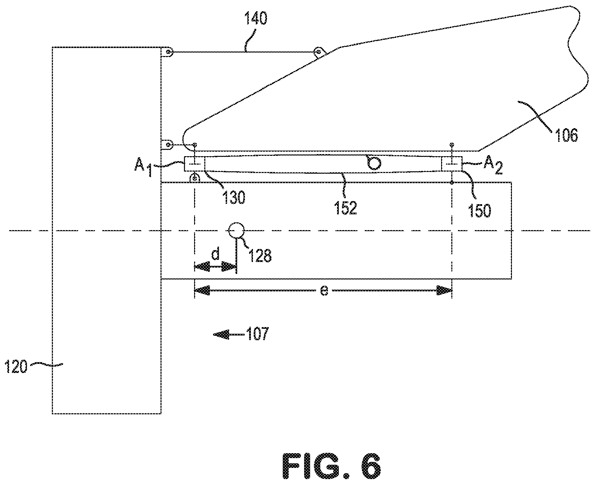

In the embodiment illustrated in FIG. 6, vertical load support **152** comprises a fluid-coupled loading device at first forward mount **130** and at aft mount **150**. In some embodiments, vertical load support **152** includes a piston at each of first forward mount **130** and at aft mount **150,** the pistons being in communication with fluid chambers that are connected by a fluid conduit such that fluid can pass between the fluid chambers when acted on by a force. In this arrangement, vertical load support **152** is oriented and coupled to the mounts such that vertical loads cause compression in the fluid, but pitch loads are not reacted as the fluid is pumped from first forward mount **130** to aft mount **150** or vice versa. This arrangement is the inverse of a fluid torque restraint, since rather than reacting torque and permitting vertical loading, it reacts vertical loads while permitting torque with little or no restraint. In some embodiments, the sizing of the piston areas at first forward mount **130** and aft mount **150** is designed to ensure that the vertical load sharing split between first forward mount **130** and aft mount **150** remains constant regardless of the pitch motion or loading. In some embodiments, this split is defined as follows:

$$A_1 = \left(\frac{e}{d} - 1\right) A_2$$

where $A_1$ is the piston area at first forward mount **130,** $A_2$ is the piston area at aft mount **150,** $d$ is a (non-zero) distance between a center of gravity **128** of engine **120** and a point at which first forward mount **130** is connected to core **122,** and $e$ is a distance between the point at which first forward mount **130** is connected to core **122** and a point at which aft mount **150** is connected to core

122. This arrangement helps to minimize total deflection of the aft side of engine **120** due to maneuver loads in the vertical direction while ensuring pitch is controlled by the first and second forward mount paths.

In some embodiments, vertical load support **152** is configured such that the fluid path is designed to provide damping in the pitch motion direction under fan blade off conditions as noted above where second forward mount **140** and/or a vertical-load-bearing element of aft mount **150** may "fuse" under high loads. In this way, the added damping helps to control the engine pitch mode response in the run down of engine **120** after the fan blade off event as the engine speed crosses engine/airframe modes. In addition, the damping generated reduces pitch-related mode responses during any windmilling conditions. This effect reduces loads transmitted to the airframe under these conditions. In this condition, the deflection gap shown in FIG. 3 may be included to provide a mechanism for reacting pitch moment beyond a specific defined deflection under this failed condition. In embodiments in which second forward mount **140** is designed to "fuse" during a fan blade off condition as discussed above, this ability of vertical load support **152** to react pitch moments adds a second load path to at least partially compensate for the loss of the pitch restraint provided by second forward mount **140**.

Furthermore, as the configurations of mounting system **100** discussed above are configured to substantially decouple the vertical load carrying at aft mount **150** from the ability to react torque in the X direction, an additional feature enabled by such configurations is the ability to control the engine pitch orientation relative to pylon **106** and wing **108** by changing the length of second forward mount **140** and/or aft mount **150**. In some embodiments, second forward mount **140** is configured to be lengthened or shortened such as by a ball screw, hydraulic pressure with position control, or other structure. In this way, the engine is rotatable about first forward mount **130** as second forward mount **140** changes length. In some embodiments, the mechanism that decouples the vertical load and roll moment reaction at aft mount **150** (e.g., a torque tube or fluid torque restraint) accommodates this movement by accommodating the vertical motion at the rear. In such embodiments, the vertical position of aft mount **150** relative to pylon **106** is adjustable, but this adjustability does not affect loading because no vertical load is reacted at aft mount **150** or because the force is substantially constant relative to vertical displacement in accordance with the exemplary embodiments discussed above. Redundancy and safety are provided with dual load path or redundancy in second forward mount **140** or in combination with a fail-safe catch at aft mount **150**.

In any configuration, the engine pitch angle is set to optimize airflow in interaction with wing **108** to reduce aircraft drag. This angle is optimized to flight conditions based upon the aircraft weight and required flight conditions. In conventional mounting arrangements, the engine-to-pylon relative pitch angle is set for maximum overall efficiency for a single cruise condition and accounts for deflection of engine **120**, pylon **106**, and wing **108** under the loads at this single condition design point. Other conditions off of this single weight, airspeed, and/or altitude design point often result in operation at reduced efficiency. Accordingly, the ability to change the pitch angle through adjustment of mounting system **100** permits optimization based on changing flight conditions throughout the flight segment, for example as the aircraft weight is reduced due to fuel burn or airspeed changes are required with resulting reduction in drag and fuel burn.

In addition, the pitch angle change feature benefits the anti-ice system of the nacelle by permitting a reduction in the angle of attack of the nacelle relative to the incoming airflow, minimizing the asymmetric flow pattern and ice build-up during icing conditions. This benefit could reduce the power requirements for anti-icing and improve overall propulsion efficiency.

In an example not forming part of the presently claimed subject-matter but useful for understanding it, the pitch change capability discussed above may be added to a more conventional mounting system. In this case, first forward mount **130** reacts vertical and lateral loading as well as thrust. Aft mount **150** reacts vertical and lateral loads and torque about the X-axis. Moments about the Y- and Z-axes are reacted by the lateral and vertical loads at the rear and the axial displacement between the forward and aft mounts. To provide a mechanism to adjust the relative pitch to pylon **106**, the vertical load reaction capability and moment reaction capability about the X-axis of aft mount **150** are decoupled by the use of a torque-tube type mounting similar to one defined in U.S. Patent No. 5,108,045. In variants, the torque-tube arrangement includes elastomer at the tube pivots, while in other variants, hard bearings are used, such as those known in the use of torque tubes in turboprops. With the decoupling completed by the torque tube, in some variants, a vertical positioning actuator (e.g., either ball screw type or fluid force device like a hydraulic mount) is located at aft mount **150** to set the vertical position relative to pylon **106**.

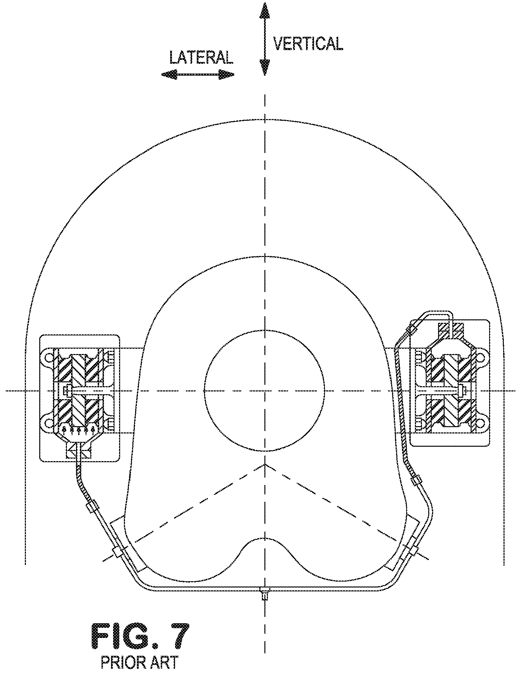

Furthermore, rather than using a torque tube device to decouple the vertical load and roll moment reaction of aft mount **150**, a fluidic torque restraint type system is used to generate the same result. Such devices are known and in use on turboprop and turboshaft aircraft engine installations to decouple engine torque from vertical load reaction. (See, e.g., U.S. Patent No. 5,127,607) Such configurations provide high roll stiffness with very low or zero vertical stiffness. High roll stiffness is similar to that of existing known mount systems. Very low vertical stiffness is about 0% to about 10% of the pitch moment reacted at the rear mount. An example of such an arrangement is shown in FIG. 7.

Torque loading generates hydrostatic compression in the fluid while vertical motion causes transfer of the fluid from one mount side to the other. In some embodiments, the mounts are an elastomeric-fluid-containment-style as shown in FIG. 7, although those having skill in the art will recognize that such a system can be arranged simply using two hydraulic cylinders of typical construction. In any configuration, vertical positions are changed by a secondary actuation device as discussed above.

In the configurations discussed above in which a fluid torque restraint is provided at the rear of mounting system **100** to provide the decoupling of vertical loads and the moment reaction about the X-axis, the fluid torque restrain is further tuned to provide high damping from the fluid flow under windmilling or fan blade off events, as these would generate vertical displacement of engine **120** relative to pylon **106**.

Although exemplary configurations of mounting system **100** are described above, any of a variety of alternative configurations are contemplated that would likewise achieve the benefits discussed. For example, and not forming part of the presently claimed subject-matter but useful for understanding it, mounting system **100** could use a forward mount configuration that is more conventional, with thrust links and a whiffle tree, as shown in the mount system of Figure 1 of U.S. Patent No. 7,232,091, with thrust links from the forward main fitting to the engine, or the forward mount could attach at a single point to the engine using a single monoball-type fitting or any other adaptation that reacts thrust at a forward mount point. In addition, for aft mount **150** to provide the required torque and lateral restraint, a torque tube arrangement similar to U.S. Patent Nos. 5,108,045 or 4,805,851 could be adapted with or without laminated elastomer elements. A fluid torque restraint could be adapted as well (See, e.g., U.S. Patent No. 5,127,607). Providing means to meet the fail-safe requirements will be needed for this type of arrangement, but are not prohibitive to the general load path approach.

Other embodiments of the current invention will be apparent to those skilled in the art from a consideration of this specification or practice of the invention disclosed herein. Thus, the foregoing specification is considered merely exemplary of the current invention with the true scope thereof being defined by the following claims.

**Claims**

1.    An engine mounting system (100) comprising:

a first forward mount (130) connectable between a forward part of a structure (104) of an aircraft and a first forward part of an engine (120) of the aircraft, the first forward mount being configured to independently react forces generated in each of a longitudinal direction (X) parallel to a longitudinal axis (105) of the engine, in a lateral direction (Y) transverse to the engine, and in a vertical direction (Z);

an aft mount (150) connectable between the structure (104) and an aft part of the engine (120), the aft mount being configured to react forces generated in the lateral direction (Y) and to react moments about the longitudinal direction (X); and

a second forward mount (140) connectable between a forward part of the structure (104) and a second forward part of the engine (120), the second forward mount (140) being configured to react forces generated in the longitudinal direction (X);

wherein the second forward mount (140) is offset by a distance from the first forward mount (130) such that the reaction of the first and second forward mounts to forces in the longitudinal direction (X) reacts moments about the lateral direction.

2.    The engine mounting system of claim 1, wherein the aft mount (150) is configured to react forces generated in the vertical direction (Z) after a pitch deflection of the engine exceeds a defined value.

3.    The engine mounting system of claim 1, wherein the aft mount (150) is configured to react forces generated in the vertical direction (Z) based on a controlled spring rate.

4.    The engine mounting system of claim 1, wherein the second forward mount (140) comprises a connecting rod (142) connectable in the generally longitudinal direction between the structure (104) and the second forward part of the engine (120).

5.    The engine mounting system of claim 1, wherein the second forward mount (140) is a structural-mechanical fuse and is able to at least partially fail under a fan blade off event such that a stiffness of the second forward mount (140) is reduced from a first stiffness value to a lower second stiffness value of about 50% or less upon the fan blade off event, and wherein the first forward mount (130) and the aft mount (150) are configured to react moments about the lateral direction (Y) following such an event.

6.    The engine mounting system of claim 5, wherein the second forward mount (140) has a non-zero stiffness upon the fan blade off event such that the second forward mount remains configured to at least partially react forces generated in the longitudinal direction (X).

7.    The engine mounting system of claim 5, wherein the second forward mount (140) is configured to at least partially dampen forces generated in the longitudinal direction (X) upon the fan blade off event.

**8.** The engine mounting system of claim 1, wherein a length of the second forward mount (140) is adjustable so as to change a pitch orientation of the engine (120) relative to the structure (104).

**9.** The engine mounting system of claim 1, comprising a vertical load support (152) coupled to the first forward mount (130) and the aft mount (150), the vertical load support including a piston at each of the first forward and aft mounts, the pistons being in communication with fluid chambers that are connected by a fluid conduit such that fluid can pass between the fluid chambers when acted on by a force, whereby the vertical load support is configured to react loads in the vertical direction without reacting moments about the lateral direction at the aft mount.

**10.** The engine mounting system of claim 9, wherein the vertical load support (152) comprises a fluid-coupled loading device and the engine mounting system being configured such that vertical loads cause compression in a fluid contained therein, but pitch loads are not reacted as the fluid is pumped between the first forward mount (130) and the aft mount (150).

**Patentansprüche**

**1.** Ein Triebwerkaufhängungssystem (100), beinhaltend:

eine erste vordere Aufhängung (130), die zwischen einem vorderen Teil einer Struktur (104) eines Flugzeugs und einem ersten vorderen Teil eines Triebwerks (120) des Flugzeugs angeschlossen werden kann, wobei die erste vordere Aufhängung so konfiguriert ist, dass sie unabhängig auf Kräfte reagiert, die in einer Längsrichtung (X) parallel zu einer Längsachse (105) des Triebwerks, in einer Querrichtung (Y) quer zu dem Triebwerk und in einer vertikalen Richtung (Z) erzeugt werden;
eine hintere Aufhängung (150), die zwischen der Struktur (104) und einem hinteren Teil des Triebwerks (120) angeschlossen werden kann, wobei die hintere Aufhängung so konfiguriert ist, dass sie auf in der Querrichtung (Y) erzeugte Kräfte und auf Momente um die Längsrichtung (X) reagiert; und
eine zweite vordere Aufhängung (140), die zwischen einem vorderen Teil der Struktur (104) und einem zweiten vorderen Teil des Triebwerks (120) angeschlossen werden kann, wobei die zweite vordere Aufhängung (140) so konfiguriert ist, dass sie auf in der Längsrichtung (X) erzeugte Kräfte reagiert;
wobei die zweite vordere Aufhängung (140) um einen Abstand von der ersten vorderen Aufhängung (130) versetzt ist, sodass die Reaktion der ersten und der zweiten vorderen Aufhängung auf Kräfte in der Längsrichtung (X) auf Momente um die Querrichtung reagiert.

**2.** Triebwerkaufhängungssystem gemäß Anspruch 1, wobei die hintere Aufhängung (150) so konfiguriert ist, dass sie auf Kräfte reagiert, die in der vertikalen Richtung (Z) erzeugt werden, nachdem eine Nickauslenkung des Triebwerks einen definierten Wert überschreitet.

**3.** Triebwerkaufhängungssystem gemäß Anspruch 1, wobei die hintere Aufhängung (150) so konfiguriert ist, dass sie auf Kräfte, die in der vertikalen Richtung (Z) erzeugt werden, basierend auf einer kontrollierten Federkonstante reagiert.

**4.** Triebwerkaufhängungssystem gemäß Anspruch 1, wobei die zweite vordere Aufhängung (140) eine Anschlussstange (142) beinhaltet, die in der allgemeinen Längsrichtung zwischen der Struktur (104) und dem zweiten vorderen Teil des Triebwerks (120) angeschlossen werden kann.

**5.** Triebwerkaufhängungssystem gemäß Anspruch 1, wobei die zweite vordere Aufhängung (140) eine strukturmechanische Sicherung ist und in der Lage ist, bei einem Fan-Blade-Off-Ereignis mindestens zum Teil zu versagen, sodass eine Steifigkeit der zweiten vorderen Aufhängung (140) bei dem Fan-Blade-Off-Ereignis von einem ersten Steifigkeitswert auf einen niedrigeren zweiten Steifigkeitswert von etwa 50 % oder weniger reduziert wird, und wobei die erste vordere Aufhängung (130) und die hintere Aufhängung (150) so konfiguriert sind, dass sie nach einem solchen Ereignis auf Momente um die Querrichtung (Y) reagieren.

**6.** Triebwerkaufhängungssystem gemäß Anspruch 5, wobei die zweite vordere Aufhängung (140) eine von null verschiedene Steifigkeit bei dem Fan-Blade-Off-Ereignis aufweist, sodass die zweite vordere Aufhängung so konfiguriert bleibt, dass sie mindestens zum Teil auf in der Längsrichtung (X) erzeugte Kräfte reagiert.

**7.** Triebwerkaufhängungssystem gemäß Anspruch 5, wobei die zweite vordere Aufhängung (140) so konfiguriert ist, dass sie die in der Längsrichtung (X) erzeugten Kräfte beim Fan-Blade-Off-Ereignis mindestens zum Teil dämpft.

**8.** Triebwerkaufhängungssystem gemäß Anspruch 1, wobei eine Länge der zweiten vorderen Aufhängung (140) einstellbar ist, um eine Neigungsausrichtung des Triebwerks (120) relativ zu der Struktur (104) zu ändern.

9. Triebwerkaufhängungssystem gemäß Anspruch 1, beinhaltend einen Vertikalastträger (152), der mit der ersten vorderen Aufhängung (130) und der hinteren Aufhängung (150) gekoppelt ist, wobei der Vertikallastträger einen Kolben an jeweils der ersten vorderen und hinteren Aufhängung umfasst, wobei die Kolben mit Fluidkammern in Verbindung stehen, die durch eine Fluidleitung angeschlossen sind, sodass Fluid zwischen den Fluidkammern fließen kann, wenn eine Kraft darauf einwirkt, wodurch der Vertikallastträger so konfiguriert ist, dass er auf Lasten in der vertikalen Richtung reagiert, ohne auf Momente um die laterale Richtung an der hinteren Aufhängung zu reagieren.

10. Triebwerkaufhängungssystem gemäß Anspruch 9, wobei der Vertikallastträger (152) eine fluidgekoppelte Lastvorrichtung beinhaltet und das Triebwerkaufhängungssystem so konfiguriert ist, dass vertikalen Lasten eine Verdichtung in einem darin enthaltenen Fluid bewirken, wobei jedoch auf Nicklasten nicht reagiert wird, wenn das Fluid zwischen der ersten vorderen Aufhängung (130) und der hinteren Aufhängung (150) gepumpt wird.

## Revendications

1. Un système de montage pour moteur (100) comprenant :

un premier élément de montage avant (130) pouvant être raccordé entre une partie avant d'une structure (104) d'un aéronef et une première partie avant d'un moteur (120) de l'aéronef, le premier élément de montage avant étant configuré pour réagir indépendamment à des forces générées dans chaque direction parmi une direction longitudinale (X) parallèle à un axe longitudinal (105) du moteur, dans une direction latérale (Y) transversale au moteur, et dans une direction verticale (Z) ;
un élément de montage arrière (150) pouvant être raccordé entre la structure (104) et une partie arrière du moteur (120), l'élément de montage arrière étant configuré pour réagir à des forces générées dans la direction latérale (Y) et pour réagir à des moments autour de la direction longitudinale (X) ; et
un deuxième élément de montage avant (140) pouvant être raccordé entre une partie avant de la structure (104) et une deuxième partie avant du moteur (120), le deuxième élément de montage avant (140) étant configuré pour réagir à des forces générées dans la direction longitudinale (X) ;
dans lequel le deuxième élément de montage avant (140) est décalé d'une distance par rapport au premier élément de montage avant (130) de telle sorte que la réaction des premier et deuxième éléments de montage avant à des forces dans la direction longitudinale (X) réagit à des moments autour de la direction latérale.

2. Le système de montage pour moteur de la revendication 1, dans lequel l'élément de montage arrière (150) est configuré pour réagir à des forces générées dans la direction verticale (Z) après qu'une déflexion de tangage du moteur a dépassé une valeur définie.

3. Le système de montage pour moteur de la revendication 1, dans lequel l'élément de montage arrière (150) est configuré pour réagir à des forces générées dans la direction verticale (Z) sur la base d'une raideur du ressort contrôlée.

4. Le système de montage pour moteur de la revendication 1, dans lequel le deuxième élément de montage avant (140) comprend une bielle (142) pouvant être raccordée dans la direction généralement longitudinale entre la structure (104) et la deuxième partie avant du moteur (120).

5. Le système de montage pour moteur de la revendication 1, dans lequel le deuxième élément de montage avant (140) est un fusible structurel-mécanique et est à même de tomber en panne au moins partiellement lors d'un événement de perte d'aube de soufflante de telle sorte qu'une rigidité du deuxième élément de montage avant (140) est réduite d'une première valeur de rigidité à une deuxième valeur de rigidité plus basse d'environ 50 % ou moins suite à l'événement de perte d'aube de soufflante, et dans lequel le premier élément de montage avant (130) et l'élément de montage arrière (150) sont configurés pour réagir à des moments autour de la direction latérale (Y) à la suite d'un tel événement.

6. Le système de montage pour moteur de la revendication 5, dans lequel le deuxième élément de montage avant (140) a une rigidité non nulle suite à l'événement de perte d'aube de soufflante de telle sorte que le deuxième élément de montage avant reste configuré pour réagir au moins partiellement à des forces générées dans la direction longitudinale (X).

7. Le système de montage pour moteur de la revendication 5, dans lequel le deuxième élément de montage avant (140) est configuré pour amortir au moins partiellement des forces générées dans la direction longitudinale (X) suite à l'événement de perte d'aube de soufflante.

8. Le système de montage pour moteur de la revendication 1, dans lequel une longueur du deuxième élément de montage avant (140) peut être ajustée de manière à changer une orientation de tangage du moteur (120) relativement à la structure (104).

9. Le système de montage pour moteur de la revendication 1, comprenant un support de charge verticale (152) couplé au premier élément de montage avant (130) et à l'élément de montage arrière (150), le support de charge verticale incluant un piston au niveau de chaque élément de montage parmi le premier élément de montage avant et l'élément de montage arrière, les pistons étant en communication avec des chambres à fluide qui sont raccordées par un conduit de fluide de telle sorte que du fluide peut passer entre les chambres à fluide lorsqu'une force agit dessus, grâce à quoi le support de charge verticale est configuré pour réagir à des charges dans la direction verticale sans réagir à des moments autour de la direction latérale au niveau de l'élément de montage arrière.

10. Le système de montage pour moteur de la revendication 9, dans lequel le support de charge verticale (152) comprend un dispositif de chargement couplé à du fluide et le système de montage pour moteur étant configuré de telle sorte que des charges verticales entraînent une compression dans un fluide contenu dans celui-ci, mais des charges de tangage ne sont pas réagies tandis que le fluide est pompé entre le premier élément de montage avant (130) et l'élément de montage arrière (150).

FIG. 1A

**FIG. 1B**

**FIG. 2A**

EP 3 497 017 B1

**FIG. 2B**

EP 3 497 017 B1

FIG. 3

FIG. 4

FIG. 5A

EP 3 497 017 B1

FIG. 5B

FIG. 6

FIG. 7
PRIOR ART

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7021585 B
- US 8950702 B
- FR 2969578 B1
- EP 2607658 A2
- EP 1571081 A1
- FR 2921900 A1

- GB 2013786 A
- US 5108045 A
- US 4805851 A
- US 5127607 A
- US 7232091 B